# EUROPÄISCHE PATENTSCHRIFT

(11) **EP 1 575 195 B1**
(45) Veröffentlichungstag und Bekanntmachung des Hinweises auf die Patenterteilung: **23.01.2008**
(21) Anmeldenummer: 05090060.4
(22) Anmeldetag: 09.03.2005
(51) Int. Cl.: H04B 10/158

(54) **Empfängerschaltung mit einer optischen Empfangseinrichung und bandbreiteabhängiger Verstärkung**
Receiver circuit with an optical receiving device and bandwidth dependent amplification
Circuit récepteur avec un dispositif de réception et amplification dépendant a la largeur de bande

(30) Priorität: 12.03.2004 US 799785
(43) Veröffentlichungstag der Anmeldung: 14.09.2005
(73) Patentinhaber: Finisar Corporation, Sunnyvale, CA 94089 (US)
(72) Erfinder: Schrödinger, Karl, D-14089 Berlin (DE)
(74) Vertreter: Müller, Wolfram Hubertus

(56) Entgegenhaltungen:
- GB-A- 2 402 281
- US-A- 5 202 553
- US-A- 6 069 731

## Beschreibung

Die Erfindung bezieht sich auf eine Empfängerschaltung mit einer optischen Empfangseinrichtung und mit einem der optischen Empfangseinrichtung nachgeschalteten Verstärker. Insbesondere betrifft die Erfindung einer Empfängerschaltung mit einem Transimpedanzverstärker für optische Übertragungssysteme.

### Hintergrund der Erfindung

Es sind Empfängerschaltungen mit einer optischen Empfangseinrichtung bekannt, bei denen auf die optische Empfangseinrichtung einfallendes Licht - beispielsweise Licht aus einem optischen Lichtwellenleiter eines optischen Datenübertragungssystems - von der optischen Empfangseinrichtung unter Bildung eines elektrischen Signals (z. B. eines Fotostroms) detektiert und anschließend das elektrische Signal von dem nachgeschalteten Verstärker verstärkt wird.

Eine optische Empfängerschaltung mit einer optischen Empfangseinrichtung und mit einem nachgeschalteten Verstärker ist beispielsweise in dem Artikel "High Gain Transimpedance Amplifier in InP-Based HBT Technology for the Receiver in 40-Gb/s Optical-Fiber TDM Links" (Jens Müllrich, Herbert Thurner, Ernst Müllner, Joseph F. Jensen, Senior Member, IEEE, William E. Stanchina, Member, IEEE, M. Kardos, and Hans-Martin Rein, Senior Member, IEEE - IEEE Journal of Solid State Circuits, vol. 35, No. 9, September 2000, Seiten 1260 bis 1265) beschrieben. Bei dieser Empfängerschaltung ist eingangsseitig ein differenziell betriebener Transimpedanzverstärker - also ein Differenzverstärker - vorhanden, der mit einem Eingang an eine Fotodiode als Empfangseinrichtung angeschlossen ist. Der andere Eingang des differenziell betriebenen Transimpedanzverstärkers ist mit einem Gleichstromverstärker verbunden, der einen "Korrekturstrom" zur Offset-Korrektur des Fotostromes der Fotodiode in den Differenzverstärker einspeist.

In dem Artikel von A. Schild et al.: "Amplifier Array for 12 Parallel 10 Gb/s Optical-Fiber Links Fabricated in a SiGe Production Technology", International Microwave Symposium 2002, wird unter anderem der Aufbau eines Transimpedanzverstärkers einer Empfängerschaltung beschrieben. Ein derartiger Transimpedanzverstärker ist des weiteren in A. Schild et al.: "High-Gain SiGe Transimpedance Amplifier Array for a 12x10 Gb/s Parallel Optical Fiber Link", IEEE Journal of Solid State Circuits, January 2003, Vol. 38, Number 1, page 4-12 beschrieben.

Bei der Ermittlung eines optimalen Verstärkungswertes für einen Transimpedanzverstärker ist die geforderte Bandbreite zu berücksichtigen. Bei einer kleinen Bandbreite ist eine große Verstärkung möglich, wohingegen bei einer großen Bandbreite nur eine kleine Verstärkung erzielt werden kann. Dies liegt daran, dass in erster Näherung das Bandbreiten-Verstärkungsprodukt (V * B) annähernd konstant und durch die individuelle Gestaltung der Empfängerschaltung vorgegeben ist.

Empfängerschaltungen nach dem Stand der Technik sind aus US-A-5 202 553 sowie US-A-6 069 731 bekannt.

Ist also eine bestimmte Bandbreite vorgegeben bzw. mindestens zu erreichen, so kann benutzerseitig daraus abgeleitet werden, welche Verstärkung maximal zulässig ist. Jedoch kann die Verstärkung eines Transimpedanzverstärkers nur in einem begrenzten Rahmen eingestellt werden. Damit ist auch nur in einem begrenzten Rahmen die Optimierung der Verstärkung in Bezug auf die Bandbreite möglich.

Es besteht ein Bedarf nach Empfängerschaltungen, die auch für stark variierende Übertragungsraten optimal einsetzbar ist.

### Zusammenfassung der Erfindung

Die Erfindung stellt eine Empfängerschaltung gemäß Anspruch 1 zur Verfügung, die u.a aufweist: eine optische Empfangseinrichtung, eine Mehrzahl von mit der Empfangseinrichtung verbundenen Verstärkern und Schaltungsmittel zum individuellen Aktivieren und Deaktivieren der einzelnen Verstärker. Dabei unterscheiden die Verstärker sich in mindestens einem Parameter, nämlich mindestens in ihrer Verstärkung jeweils voneinander. Zu einem gegebenen Zeitpunkt ist immer nur ein Verstärker aktiviert, während die anderen Verstärker deaktiviert sind.

Die erfindungsgemäße Lösung ermöglicht einen optimalen Einsatz der Empfängerschaltung auch bei stark variierenden Übertragungsraten (Datenraten). So wird in Abhängigkeit von der aktuellen oder einer mindestens bereitzustellenden Bandbreite derjenige Verstärker aktiviert, der zur Verstärkung dieser Bandbreite am besten geeignet ist. Es werden somit gesamte Verstärker ein- und ausgeschaltet. Hierdurch ist eine wesentlich größere Bandbreitenvariation möglich, als wenn mittels Maßnahmen innerhalb eines Verstärkers versucht werden würde, dessen Bandbreite zu ändern. Die Erfindung ermöglicht eine optimale optische Empfindlichkeit, da je nach der vorgegebenen oder zu erreichenden Bandbreite eine maximale Verstärkung einstellbar ist.

Die einzelnen Verstärker unterscheiden sich in mindestens einem Parameter, nämlich mindestens in ihrer Verstärkung voneinander. Ein solcher Parameter ist bevorzugt die Verstärkung des Verstärkers, die - aufgrund der näherungsweisen Konstanz des Bandbreiten-Verstärkungsprodukt (V * B) - die Bandbreite des Verstärkers bestimmt. Es kann die Empfängerschaltung aufgrund der umschaltbaren Verstärker beispielsweise an Übertragungsraten von 100 Mb/s (Mega-Bit pro Sekunde), 1 Gb/s (Giga-Bit pro Sekunde) oder 10 Gb/s individuell angepasst werden.

Die Festlegung einer bestimmten Verstärkung einer Verstärkers erfolgt in einer dem Fachmann an sich bekannter Weise etwa durch geeignete Dimensionierung der Transistoren, anderer Schaltungselemente und der Ströme, so dass hierauf nicht weiter eingegangen wird.

Ein weiterer Vorteil der erfindungsgemäßen Empfängerschaltung besteht in ihrem optimalen Rauschverhalten. Wird beispielsweise als Empfangseinrichtung eine Fotodiode und als Verstärker ein Transimpedanzverstärker eingesetzt, so spielt bei dem Verstärker das Stromrauschen eine besonders relevante Rolle. Das Stromrauschen wird jedoch zu höheren Verstärkungen des Verstärkers hin in der Regel geringer, so dass bei Wahl der optimalen - also maximalen Verstärkung - auch das Stromrauschen des Verstärkers abnimmt. Auch bei anderen Verstärkertypen gilt allgemein, dass bei einer größeren Verstärkung das Signal-Rauschverhältnis besser wird. Somit lässt sich durch die erfindungsgemäße Auswahl eines geeigneten Verstärkers je nach dem jeweiligen Bandbreite-Erfordernis ein optimales Rauschverhalten der Empfängerschaltung erzielen.

In einer bevorzugten Ausgestalung der Erfindung weisen die Verstärker jeweils einen Anschluss zum Bereitstellen einer Versorgungsspannung auf und schalten die Schaltungsmittel zum individuellen Aktivieren und Deaktivieren der einzelnen Verstärker für jeden Verstärker die Versorgungsspannung ein-oder aus. Ein Umschalten zwischen den Verstärkern erfolgt also durch entsprechendes Ein- und Ausschalten der Versorgungsspannung der Verstärker. Es kann die positive oder negative Versorgungsspannung geschaltet werden.

In einer weiteren bevorzugten Ausgestaltung weisen die Verstärker jeweils einen mit der Empfangseinrichtung verbundenen Eingang und einen Ausgang auf und schalten die Schaltungsmittel zum individuellen Aktivieren und Deaktivieren der einzelnen Verstärker für jeden Verstärker den Eingang und/oder der Ausgang ein- oder aus. Ein Umschalten zwischen den Verstärkern erfolgt bei dieser Variante durch entsprechendes Ein- und Ausschalten der Eingänge und/oder Ausgänge der Verstärker.

In einer weiteren bevorzugten Ausgestaltung weisen die Verstärker jeweils eine Stromquelle auf und schalten die Schaltungsmittel zum individuellen Aktivieren und Deaktivieren der einzelnen Verstärker für jeden Verstärker die Stromquelle ein- oder aus. Ein Umschalten zwischen den Verstärkern erfolgt bei dieser Variante durch entsprechendes Ein- und Ausschalten der Stromquelle der Verstärker. Sofern ein Verstärker mehrere Stromquellen aufweist, werden bevorzugt sämtliche Stromquellen eines Verstärkers ein- oder ausgeschaltet. Durch Abschalten der Stromquelle wird der entsprechende Verstärker hochohmig geschaltet und ist daher nicht mehr wirksam.

In einer vorteilhaften Ausgestaltung sind die einzelnen Verstärker der Empfängerschaltung parallel zueinander geschaltet. Durch die Schaltmittel ist jeweils einer der parallel angeordneten Verstärker aktiviert, während die anderen Verstärker deaktiviert sind. Es ist alternativ jedoch grundsätzlich auch eine Reihenschaltung mehrerer Verstärker denkbar, wobei jeweils Bypass-Leitungen vorgesehen sind, die über die Schaltmittel ein- und ausschaltbar sind, und die die nicht aktivierten Verstärker gewissermaßen kurzschließen, so dass wiederum zu einem betrachteten Zeitpunkt immer nur ein Verstärker aktiviert ist.

Die Schaltungsmittel weisen bevorzugt eine Vielzahl von individuell einstellbaren Schaltern auf, die beispielsweise als MOS-Transistoren realisiert sind. Die Schaltungsmittel sind dabei über zumindest eine Steuerleitung einstellbar. Die Einstellung der Schaltungsmittel über entsprechende Steuerleitungen erfolgt bevorzugt benutzerseitig in Abhängigkeit von der Bandbreite des Datenstroms.

Beispielsweise ist eine Schaltung zur automatischen Messung der aktuellen Bandbreite des empfangenen Signals vorgesehen und werden in Abhängigkeit von der gemessenen Bandbreite automatisch Steuerleitungen derart mit Steuersignalen beaufschlagt, dass ein geeigneter Verstärker aktiviert und die übrigen Verstärker deaktiviert werden.

Die einzelnen Verstärker sind bevorzugt zusammen mit den Schaltmitteln monolithisch in einen gemeinsamen Chip integriert, so dass eine kompakte, vorprüfbare Einheit vorliegt.

### Kurze Beschreibung der Zeichnungen

Die Erfindung wird nachfolgend unter Bezugnahme auf die Figuren anhand eines Ausführungsbeispieles näher erläutert.
Es zeigen
- Fig. 1: ein Ausführungsbeispiel für eine Empfängerschaltung mit einer optischen Empfangseinrichtung und einer Mehrzahl von parallel zueinander geschalteten individuellen Empfängerschaltungen, und
- Fig. 2: ein Ausführungsbeispiel einer Verstärkerzelle eines Verstärkers gemäß der Figur 1.

### Beschreibung eines bevorzugten Ausführungsbeispiels

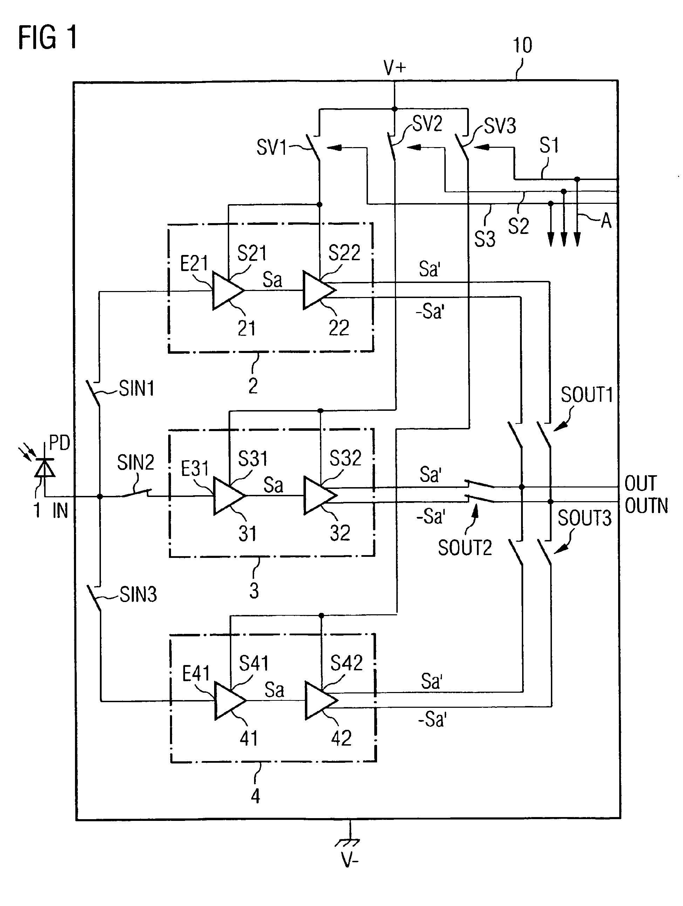

Die Figur 1 zeigt eine Empfängerschaltung 10 mit einer Fotodiode 1 als optischer Empfangseinrichtung und drei nachgeordneten, parallel zueinander geschalteten Verstärkern 2, 3, 4, wobei zu einem gegebenen Zeitpunkt immer nur einer der Verstärker 2, 3, 4 aktiviert ist.

Bevor auf die Ausbildung der Empfängerschaltung 10 mit mehreren Verstärkern 2, 3, 4 näher eingegangen wird, wird zunächst der Aufbau einer einzelnen Verstärkerschaltung und deren Funktionsweise beispielhaft an der mittleren Verstärkerschaltung 3 beschrieben.

Danach weist die Verstärkerschaltung 3 zwei Verstärkerzellen, nämlich einen Eingangsverstärker 31 und einen Ausgangsverstärker 32 auf. Der Eingangsverstärker 31 ist bevorzugt als Transimpedanzverstärker ausgebildet und besteht in an sich bekannter Weise aus einem Spannungsverstärker, beispielsweise einem Operationsverstärker, und einem Rückkopplungswiderstand. Der Rückkopplungswiderstand ist in der Figur 1 nicht gesondert dargestellt. Die Verstärkung wird durch die sogenannte Transimpedanz bestimmt, d.h. das Verhältnis von Ausgangsspannung zum Eingangsstrom.

Ausgangsseitig steht der Transimpedanzverstärker 31 mit dem Ausgangsverstärker 32 in Verbindung, der ein Ausgangssignal Sa des Transimpedanzverstärkers 31 verstärkt. Der Ausgangsverstärker 32 ist bevorzugt als Differenzverstärker ausgebildet. Eine weitere Verstärkung des Signals kann durch weitere Differenzverstärker bewirkt werden, die dem Differenzverstärker 32 nachgeordnet sind. Der Ausgangsverstärker 32 steht somit symbolisch für eine geeignete Anzahl von Differenzverstärkern.

Der Transimpedanzverstärker 31 und der Ausgangsverstärker 32 weisen jeweils einen Anschluss S31, S32 für die positive Versorgungsspannung V+ auf. Ebenso ist ein Anschluss für die negative Versorgungsspannung V- vorgesehen, der zur besseren Übersichtlichkeit der Darstellung in Figur 1 jedoch nicht explizit dargestellt ist.

Die Funktionsweise des Verstärkers 3 ist wie folgt. Bei Lichteinfall wird von der Fotodiode 1 ein Fotostrom generiert und in den Transimpedanzverstärker 31 eingespeist. Dort wird der Fotostrom unter Bildung des Ausgangssignals Sa verstärkt. Das elektrische Ausgangssignal Sa wird von dem Differenzverstärker 32 unter Bildung eines verstärkten, differenziellen Ausgangssignals Sa', -Sa' weiter verstärkt und gelangt zum Ausgang der optischen Empfängerschaltung 10, wo die Signale aus Ausgangssignale OUT, OUTN vorliegen. Der Ausgang der Empfängerschaltung 10 wird durch die beiden Ausgänge OUT, OUTN gebildet.

Die weiteren Verstärker 2, 4 der Empfängerschaltung sind grundsätzlich in gleicher Weise aufgebaut. Allerdings sind die Verstärker durch geeignete Wahl der Transistoren, der Rückkopplungswiderstände, der verwendeten Ströme etc. insofern unterschiedlich, als sie jeweils unterschiedliche Verstärkungswerte für den Fotostrom der Fotodiode 1 bereitstellen.

Es sind nun eine Mehrzahl von Schaltern vorgesehen, über die bewirkt wird, dass zu einem gegebenen Zeitpunkt immer nur eine der Verstärkerschaltungen 2, 3, 4 aktiviert ist, während die anderen Schaltungen deaktiviert sind.

Eine erste Möglichkeit zur Aktivierung bzw. Deaktivierung der einzelnen Verstärker 2, 3, 4 liegt in dem Ein- und Abschalten der Versorgungsspannung. In dem Ausführungsbeispiel der Figur 1 sind drei Schaltungen SV1, SV2, SV3 vorgesehen, über die die Versorgungsspannung der jeweiligen Verstärkerzellen 21, 22, 31, 32, 41, 42 schaltbar ist. In dem dargestellten Ausführungsbeispiel ist der Schalter SV2 geschlossen, so dass die Anschlüsse S31, S32 der Verstärkerzellen 31, 32 des Verstärkers 3 mit der positiven Versorgungsspannung V+ beaufschlagt sind. Die Schalter SV1, SV3 sind dagegen geöffnet, so dass die Verstärker 2, 4 deaktiviert sind. Die Schalter SV1, SV2, SV3 sind beispielsweise als MOS-Transistoren ausgebildet. Über Steuerleitungen S1, S2, S3 sind die Schalter SV1, SV2, SV3 mit Schaltsignalen beaufschlagbar, die jeweils ein Schließen oder Öffnen des jeweiligen Schalters SV1, SV2, SV3 bewirken.

Entsprechende Schalter können statt in Bezug auf die positive Versorgungsspannung V+ ebenso auch in Bezug auf die negative Versorgungsspannung V- vorgesehen sein, wobei die Schalter dann jeweils zwischen der negativen Versorgungsspannung und dem entsprechenden Anschluss des Verstärkers ausgebildet sind.

Eine weitere Möglichkeit des Aktivierens bzw. Deaktivierens der Verstärker 2, 3, 4 besteht in dem Schalten der mit der Fotodiode 1 verbundenen Eingänge E21, E31, E41 der jeweiligen Transimpedanzverstärker 21, 31, 41 der Verstärker 2, 3, 4. Hierzu sind zwischen der Fotodiode 1 und den jeweiligen Eingängen E21, E31, E41 jeweils Schalter SIN1, SIN2, SIN3 vorgesehen. Im dargestellten Ausführungsbeispiel ist der Schalter SIN2 geschlossen, so dass der Verstärker 3 aktiviert ist. Die Schalter SIN1, SIN3 sind dagegen geöffnet, so dass die Verstärker 2, 4 deaktiviert sind. Die Schalter SIN1, SIN3 werden ebenfalls durch Steuerleitungen S1, S2, S3 mit entsprechenden Steuersignalen beaufschlagt, wobei zur besseren Übersichtlichkeit der Darstellung die Steuerleitungen S1, S2, S3 nicht bis zu den entsprechenden Schaltern SIN1, SIN2, SIN3 geführt sind, sondern dies lediglich durch Pfeile A angedeutet ist.

In entsprechender Weise ist es auch möglich, die Ausgänge der Verstärker 2, 3, 4 zu schalten. Hierzu sind jeweils zwei Schalter SOUT1, SOUT2, SOUT3 vorgesehen, die die differenziellen Ausgänge der parallel zueinander angeordneten Verstärker 2, 3, 4 jeweils mit den beiden differenziellen Ausgängen OUT, OUTn der Empfängerschaltung 10 verbinden. Auch hier erfolgt ein Schalten der jeweiligen Schalter SOUT1, SOUT2, SOUT3 wiederum durch die Steuerleitungen S1, S2, S3.

Es wird darauf hingewiesen, dass in der Darstellung der Figur 1 gleichzeitig ein Aktivieren bzw. Deaktivieren der einzelnen Verstärker 2, 3, 4 sowohl durch Schalten der Versorgungsspannung als auch durch Schalten der Eingänge und Ausgänge möglich ist. Natürlich ist es ausreichend, dass in einer praktischen Realisierung nur eine dieser Möglichkeiten realisiert ist. Sofern aus bestimmten Gründen mehrere der Möglichkeiten zum Aktivieren bzw. Deaktivieren der einzelnen Verstärker gleichzeitig realisiert sind, sind ggf. zusätzliche Steuerleitungen vorzusehen.

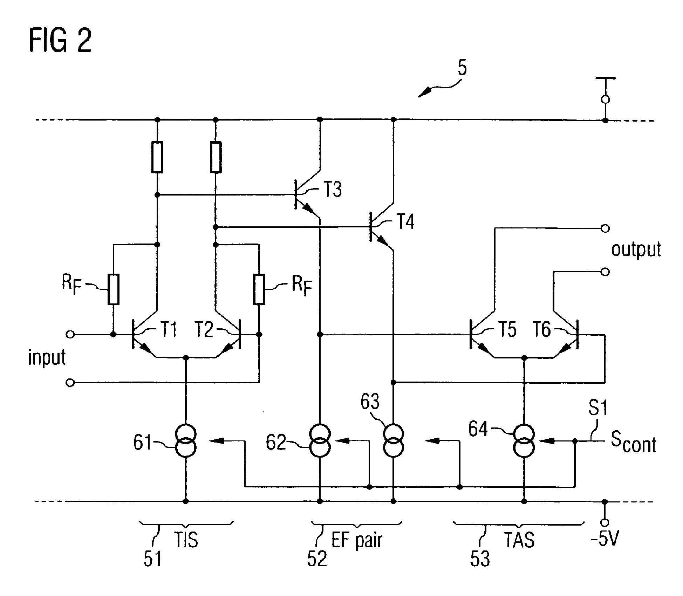

Als weitere Möglichkeit des Aktivieren bzw. Deaktivieren der einzelnen Verstärker 2, 3, 4 kann ein Umschalten von Versorgungsströmen der einzelnen Verstärker 2, 3, 4 vorgesehen sein. Dies ist anhand der Figur 2 näher erläutert. Figur 2 zeigt im Einzelnen den Aufbau eines Transimpedanzverstärkers 5, der den Transimpedanzverstärkern 21, 31, 41 der Figur 1 entspricht. Dieser besteht aus drei Stufen 51, 52, 53. Die erste Stufe 51 stellt eine Transimpedanzstufe TIS dar. Sie weist einen Differenzverstärker mit zwei Transistoren T1, T2 und eine Bias-Stromquelle 61 auf. Die beiden Input-Anschlüsse der Transistoren T1, T2 werden beispielsweise direkt mit den beiden Anschlüssen der Fotodiode 1 verbunden.

Die zweite Stufe 52 besteht aus einem Paar von Emitterfolgern T3, T4 und Bias-Stromquellen 62, 63. Die dritte Stufe 53 stellt eine Transadmittanzstufe TAS mit zwei weiteren Transistoren T5, T6 und einer Bias-Stromquelle 64 dar. Die dritte Stufe 53 stellt einen Treiber für die Verbindung zu einer weiteren Verstärkerzelle dar. Verstärker 5 bzw. Verstärkerzellen gemäß der Figur 2 sind dem Fachmann an sich bekannt, beispielsweise aus den eingangs genannten Veröffentlichungen A. Schild et al.: "Amplifier Array for 12 Parallel 10 Gb/s Optical-Fiber Links Fabricated in a SiGe Production Technology", International Microwave Symposium 2002, und A. Schild et al.: "High-Gain SiGe Transimpedance Amplifier Array for a 12x10 Gb/s Parallel Optical Fiber Link", IEEE Journal of Solid State Circuits, January 2003, Vol. 38, Number 1, page 4-12.

Die einzelnen Schaltungsteile weisen wie erläutert Bias-Stromquellen 61, 62, 63, 64 auf. Diese werden beispielsweise durch einen MOSFET-Transistor gebildet. Über eine Steuerleitung S1, über die ein Steuersignal S_{CONT} anlegbar ist, können die einzelnen Stromquellen 61, 62, 63, 64 gemeinsam geschaltet werden.

Durch Abschalten der BIAS-Stromquellen 61, 62, 63, 64 kann die jeweilige Verstärkerstufe hochohmig geschaltet werden, so dass der Verstärker 5 nicht mehr wirksam ist. Es kann somit auch durch ein Umschalten von Versorgungsströmen erreicht werden, dass nur einer der Verstärker 2, 3, 4 aktiviert ist.

Die Steuerleitungen S1, S2, S3 (vgl. Figur 1) sind beispielsweise mit einer nicht dargestellten Schaltung zur Erfassung der Bandbreite des von der Fotodiode 1 detektierten Signals verbunden. Über die Steuerleitungen S1, S2, S3 werden dabei geeignete Steuersignale an die vorhandenen Schalter derart gesandt, dass nur derjenige Verstärker 2, 3, 4 aktiviert ist, der zur Verstärkung der gemessenen bzw. einer mindestens bereitzustellenden Bandbreite am besten geeignet ist. Durch die Verwendung unterschiedlicher Verstärker 2, 3, 4, die insgesamt ein- bzw. ausgeschaltet werden, ist dabei eine große Bandbreitenvariation möglich.

Die Erfindung beschränkt sich in ihrer Ausgestaltung nicht auf die vorstehend dargestellten Ausführungsbeispiele, die lediglich beispielhaft zu verstehen sind. Der Fachmann erkennt, dass zahlreiche alternative Ausführungsvarianten existieren, die trotz ihrer Abweichung von den beschriebenen Ausführungsbeispielen von der in den nachfolgenden Ansprüchen definierten Lehre Gebrauch machen.

## Patentansprüche

1. Empfängerschaltung mit
- einer optischen Empfangseinrichtung (1),
- einer Mehrzahl von mit der Empfangseinrichtung (1) verbundenen Verstärkern (2, 3, 4), und
- Schaltungsmitteln (SIN1, SIN2, SIN3; SV1, SV2, SV3; SOUT1, SOUT2, SOUT3) zum individuellen Aktivieren und Deaktivieren der einzelnen Verstärker (2, 3, 4),
- wobei die Verstärker (2, 3, 4) sich in mindestens einem Parameter, nämlich mindestens in ihrer Verstärkung jeweils voneinander unterscheiden, und
- wobei zu einem gegebenen Zeitpunkt immer nur ein Verstärker (2, 3, 4) aktiviert und die anderen Verstärker deaktiviert sind,
**gekennzeichnet durch**
- eine Schaltung zur Erfassung der Bandbreite eines von der optischen Empfangseinrichtung (1) detektierten Signals, wobei
- die Schaltung zur Erfassung der Bandbreite Steuersignale an die Schaltungsmitteln (SIN1, SIN2, SIN3; SV1, SV2, SV3; SOUT1, SOUT2, SOUT3) zum individuellen Aktivieren und Deaktivieren der einzelnen Verstärker (2, 3, 4) dahingehend aussendet, dass die Verstärker (2, 3, 4) in Abhängigkeit von der Bandbreite des detektierten Signals aktiviert oder deaktiviert werden.

2. Empfängerschaltung nach Anspruch 1, wobei die Verstärker (2, 3, 4) jeweils einen Anschluss (S21, S22; S31, S32; S41, S42) zum Bereitstellen einer Versorgungsspannung aufweisen und die Schaltungsmittel (SV1, SV2, SV3) zum individuellen Aktivieren und Deaktivieren der einzelnen Verstärker für jeden Verstärker die Versorgungsspannung ein- oder ausschalten.

3. Empfängerschaltung nach Anspruch 1, wobei die Verstärker jeweils einen mit der Empfangseinrichtung (1) verbundenen Eingang (E21, E31, E41) und einen Ausgang aufweisen und die Schaltungsmittel (SIN1, SIN2, SIN3) zum individuellen Aktivieren und Deaktivieren der einzelnen Verstärker (2, 3, 4) für jeden Verstärker den Eingang (E21, E31, E41) ein- oder ausschalten.

4. Empfängerschaltung nach Anspruch 1, wobei die Verstärker (2, 3, 4) jeweils einen mit der Empfangseinrichtung (1) verbundenen Eingang (E21, E31, E41) und einen Ausgang aufweisen und die Schaltungsmittel (SOUT1, SOUT2, SOUT3) zum individuellen Aktivieren und Deaktivieren der einzelnen Verstärker (2, 3, 4) für jeden Verstärker den Ausgang ein- oder ausschalten.

5. Empfängerschaltung nach Anspruch 1, wobei die Verstärker (2, 3, 4) jeweils eine Stromquelle aufweisen und die Schaltungsmittel zum individuellen Aktivieren und Deaktivieren der einzelnen Verstärker für jeden Verstärker die Stromquelle ein- oder ausschalten.

6. Empfängerschaltung nach Anspruch 1 oder 5, wobei jeder Verstärker (2, 3, 4) mehrere Stromquellen (61, 62, 63, 64) aufweist und die sämtliche Stromquellen eines Verstärkers ein- oder ausgeschaltet sind.

7. Empfängerschaltung nach Anspruch 1, wobei die Verstärker jeweils als Transimpedanzverstärker (21, 31, 41) ausgebildet sind.

8. Empfängerschaltung nach Anspruch 1, wobei die Verstärker jeweils mindestens zwei hintereinander geschaltete Verstärkerzellen (21, 22; 31, 32; 41, 42) aufweisen.

9. Empfängerschaltung nach Anspruch 8, wobei zumindest die erste der Verstärkerzellen (21, 31, 41), die mit der Empfangseinrichtung (1) verbunden ist, als Transimpedanzverstärker ausgebildet ist.

10. Empfängerschaltung nach Anspruch 1, wobei die einzelnen Verstärker (2, 3, 4) parallel zueinander geschaltet sind.

11. Empfängerschaltung nach Anspruch 1, wobei die Schaltungsmittel (SIN1, SIN2, SIN3; SV1, SV2, SV3; SOUT1, SOUT2, SOUT3) eine Vielzahl von individuell einstellbaren Schaltern aufweisen.

12. Empfängerschaltung nach Anspruch 12, wobei die einzelnen Schalter (SIN1, SIN2, SIN3; SV1, SV2, SV3; SOUT1, SOUT2, SOUT3) als MOS-Transistoren realisiert sind.

13. Empfängerschaltung nach Anspruch 1, wobei die Schaltungsmittel (SIN1, SIN2, SIN3; SV1, SV2, SV3; SOUT1, SOUT2, SOUT3) über zumindest eine Steuerleitung (S1, S2, S3) einstellbar sind, wobei die zumindest eine Steuerleitung (S1, S2, S3) die Schaltungsmitteln (SIN1, SIN2, SIN3; SV1, SV2, SV3; SOUT1, SOUT2, SOUT3) mit der Schaltung zur Erfassung der Bandbreite verbindet.

14. Empfängerschaltung nach Anspruch 1, wobei die Empfangseinrichtung (1) eine Photodiode ist.

15. Empfängerschaltung nach Anspruch 1, wobei die einzelnen Verstärker (2, 3, 4) monolithisch in einen gemeinsamen Chip integriert sind.

16. Empfängerschaltung nach Anspruch 1, wobei derjenige der Verstärker (2, 3, 4) aktiviert wird, der zur Verstärkung der gemessenen Bandbreite am besten geeignet ist.

## Claims

1. Receiver circuit comprising
- an optical receiving device (1),
- a plurality of amplifiers (2, 3, 4), connected to the receiving device (1), and
- circuit means (SIN1, SIN2, SIN3; SV1, SV2, SV3; SOUT1, SOUT2, SOUT3) for individually activating and deactivating the individual amplifiers (2, 3, 4),
- wherein the amplifiers (2, 3, 4) in each case differ from one another in terms of at least one parameter, namely at least in terms of their gain, and
- wherein at a given point in time there is only ever one amplifier (2, 3, 4) activated and the other amplifiers are deactivated,
**characterized by**
- a circuit for detecting the bandwidth of a signal detected by the optical receiving device (1),
wherein
- the circuit for detecting the bandwidth emits control signals to the circuit means (SIN1, SIN2, SIN3; SV1, SV2, SV3; SOUT1, SOUT2, SOUT3) for individually activating and deactivating the individual amplifiers (2, 3, 4) to the effect that the amplifiers (2, 3, 4) are activated or deactivated depending on the bandwidth of the detected signal.

2. Receiver circuit according to Claim 1, wherein the amplifiers (2, 3, 4) in each case have a terminal (S21, S22; S31, S32; S41, S42) for providing a supply voltage and the circuit means (SV1, SV2, SV3) for individually activating and deactivating the individual amplifiers switch the supply voltage on or off for each amplifier.

3. Receiver circuit according to Claim 1, wherein the amplifiers in each case have an input (E21, E31, E41) connected to the receiving device (1) and an output and the circuit means (SIN1, SIN2, SIN3) for individually activating and deactivating the individual amplifiers (2, 3, 4) switch the input (E21, E31, E41) on or off for each amplifier.

4. Receiver circuit according to Claim 1, wherein the amplifiers (2, 3, 4) in each case have an input (E21, E31, E41) connected to the receiving device (1) and an output and the circuit means (SOUT1, SOUT2, SOUT3) for individually activating and deactivating the individual amplifiers (2, 3, 4) switch the output on or off for each amplifier.

5. Receiver circuit according to Claim 1, wherein the amplifiers (2, 3, 4) in each case have a current source and the circuit means for individually activating and deactivating the individual amplifiers switch the current source on or off for each amplifier.

6. Receiver circuit according to Claim 1 or 5, wherein each amplifier (2, 3, 4) has a plurality of current sources (61, 62, 63, 64) and all of the current sources of an amplifier are switched on or off.

7. Receiver circuit according to Claim 1, wherein the amplifiers are in each case formed as transimpedance amplifiers (21, 31, 41).

8. Receiver circuit according to Claim 1, wherein the amplifiers in each case have at least two cascade-connected amplifier cells (21, 22; 31, 32; 41, 42).

9. Receiver circuit according to Claim 8, wherein at least the first one of the amplifier cells (21, 31, 41), which is connected to the receiving device (1), is formed as a transimpedance amplifier.

10. Receiver circuit according to Claim 1, wherein the individual amplifiers (2, 3, 4) are connected in parallel with one another.

11. Receiver circuit according to Claim 1, wherein the circuit means (SIN1, SIN2, SIN3, SV1, SV2, SV3, SOUT1, SOUT2, SOUT3) have a multiplicity of switches that can be set individually.

12. Receiver circuit according to Claim 12, wherein the individual switches (SIN1, SIN2, SIN3; SV1, SV2, SV3; SOUT1, SOUT2, SOUT) are realized as MOS transistors.

13. Receiver circuit according to Claim 1, wherein the circuit means (SIN1, SIN2, SIN3; SV1, SV2, SV3; SOUT1; SOUT2; SOUT3) can be set via at least one control line (S1, S2, S3), wherein the at least one control line (S1, S2, S3) connects the circuit means (SIN1, SIN2, SIN3; SV1, SV2, SV3; SOUT1, SOUT2, SOUT3) to the circuit for detecting the bandwidth.

14. Receiver circuit according to Claim 1, wherein the receiving device (1) is a photodiode.

15. Receiver circuit according to Claim 1, wherein the individual amplifiers (2, 3, 4) are monolithically integrated into a common chip.

16. Receiver circuit according to Claim 1, wherein that one of the amplifiers (2, 3, 4) is activated which is best suited to amplifying the measured bandwidth.

## Revendications

1. Circuit récepteur avec
- un dispositif optique de réception (1),
- une pluralité d'amplificateurs (2, 3, 4) reliés au dispositif de réception (1), et
- des moyens de commutation (SIN1, SIN2, SIN3 ; SV1, SV2, SV3 ; SOUT1, SOUT2, SOUT3) pour l'activation et la désactivation individuelle des différents amplificateurs (2, 3, 4),
- où les amplificateurs (2, 3, 4) se distinguent respectivement les uns des autres par au moins un paramètre, en l'occurrence au moins par leur amplification, et
- où un amplificateur (2, 3, 4) seulement est activé à chaque fois à un instant donné, les autres amplificateurs étant désactivés,
**caractérisé par**
- un circuit pour la saisie de la largeur de bande d'un signal détecté par le dispositif optique de réception (1), où
- le circuit pour la saisie de la largeur de bande émet des signaux de commande aux moyens de commutation (SIN1, SIN2, SIN3 ; SV1, SV2, SV3 ; SOUT1, SOUT2, SOUT3) pour l'activation et la désactivation individuelle des différents amplificateurs (2, 3, 4), de telle sorte que les amplificateurs (2, 3, 4) sont activés ou désactivés en fonction de la largeur de bande du signal détecté.

2. Circuit récepteur selon la revendication 1, où les amplificateurs (2, 3, 4) comportent chacun un branchement (S21, S22 ; S31, S32 ; S41, S42) pour la mise à disposition d'une tension d'alimentation et où les moyens de commutation (SV1, SV2, SV3) établissent ou interrompent le contact de la tension d'alimentation de chaque amplificateur pour l'activation et la désactivation individuelle des différents amplificateurs.

3. Circuit récepteur selon la revendication 1, où les amplificateurs comportent respectivement une entrée (E21, E31, E41) reliée au dispositif de réception (1) et une sortie, et les moyens de commutation (SIN1, SIN2, SIN3) établissent ou interrompent le contact de l'entrée (E21, E31, E41) de chaque amplificateur (2, 3, 4) pour l'activation et la désactivation individuelles des différents amplificateurs (2, 3, 4).

4. Circuit récepteur selon la revendication 1, où les amplificateurs (2, 3, 4) comportent respectivement une entrée (E21, E31, E41) reliée au dispositif de réception (1) et une sortie, et les moyens de commutation (SOUT1, SOUT2, SOUT3) établissent ou interrompent le contact de la sortie de chaque amplificateur (2, 3, 4) pour l'activation et la désactivation individuelles des différents amplificateurs (2, 3, 4).

5. Circuit récepteur selon la revendication 1, où les amplificateurs (2, 3, 4) comportent chacun une source de courant, et les moyens de commutation établissent ou interrompent le contact de la source de courant de chaque amplificateur pour l'activation et la désactivation individuelles des différents amplificateurs.

6. Circuit récepteur selon la revendication 1 ou 5, où chaque amplificateur (2, 3, 4) comportent plusieurs sources de courant (61, 62, 63, 64) et toutes les sources de courant d'un amplificateur sont contactées ou coupées.

7. Circuit récepteur selon la revendication 1, où les amplificateurs sont réalisés comme amplificateurs à transimpédance (21, 31, 41).

8. Circuit récepteur selon la revendication 1, où les amplificateurs comprennent chacun au moins deux cellules amplificatrices (21, 22 ; 31, 32 ; 41, 42) montées l'une en aval de l'autre.

9. Circuit récepteur selon la revendication 8, où la première au moins des cellules amplificatrices (21, 31, 41), qui est reliée au dispositif de réception (1), est réalisée comme amplificateur à transimpédance.

10. Circuit récepteur selon la revendication 1, où les différents amplificateurs (2, 3, 4) sont montés en parallèle les uns aux autres.

11. Circuit récepteur selon la revendication 1, où les moyens de commutation (SIN1, SIN2, SIN3 ; SV1, SV2, SV3 ; SOUT1, SOUT2, SOUT3) comportent une multitude de commutateurs réglables individuellement.

12. Circuit récepteur selon la revendication 12, où les différents moyens de commutation (SIN1, SIN2, SIN3 ; SV1, SV2, SV3 ; SOUT1, SOUT2, SOUT3) sont réalisés comme transistors MOS.

13. Circuit récepteur selon la revendication 1, où les moyens de commutation (SIN1, SIN2, SIN3 ; SV1, SV2, SV3 ; SOUT1, SOUT2, SOUT3) sont réglables via au moins une ligne de commande (S1, S2, S3), où au moins une ligne de commande (S1, S2, S3) relie les moyens de commutation (SIN1, SIN2, SIN3 ; SV1, SV2, SV3 ; SOUT1, SOUT2, SOUT3) au circuit pour la saisie de la largeur de bande.

14. Circuit récepteur selon la revendication 1, où le dispositif de réception (1) est une photodiode.

15. Circuit récepteur selon la revendication 1, où les différents amplificateurs (2, 3, 4) sont intégrés de façon monolithique dans une puce commune.

16. Circuit récepteur selon la revendication 1, où celui des amplificateurs (2, 3, 4) qui est le mieux approprié à l'amplification de la largeur de bande mesurée est activé.
